(19) Europäisches Patentamt
European Patent Office
Office européen des brevets

(11) **EP 2 335 431 B1**

(12) **FASCICULE DE BREVET EUROPEEN**

(45) Date de publication et mention
de la délivrance du brevet:
**27.03.2013 Bulletin 2013/13**

(21) Numéro de dépôt: **09748386.1**

(22) Date de dépôt: **15.09.2009**

(51) Int Cl.:
***H04W 12/06*** (2009.01)

(86) Numéro de dépôt international:
**PCT/FR2009/051725**

(87) Numéro de publication internationale:
**WO 2010/034919 (01.04.2010 Gazette 2010/13)**

(54) **DISTRIBUTION D'UNE FONCTION D'AUTHENTIFICATION DANS UN RESEAU MOBILE**

VERTEILUNG EINER AUTHENTIFIKATIONSFUNKTION IN EINEM MOBILNETZ

DISTRIBUTION OF AN AUTHENTICATION FUNCTION IN A MOBILE NETWORK

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **26.09.2008 FR 0856508**

(43) Date de publication de la demande:
**22.06.2011 Bulletin 2011/25**

(73) Titulaire: **France Télécom
75015 Paris (FR)**

(72) Inventeurs:
• **TCHEPNDA, Christian
F-92130 Issy les Moulineaux (FR)**
• **MOUSTAFA, Hassnaa
F-92100 Boulogne Billancourt (FR)**

(74) Mandataire: **Cabinet Plasseraud
52, rue de la Victoire
75440 Paris Cedex 09 (FR)**

(56) Documents cités:
**US-A1- 2008 083 022**

• **MOUSTAFA H ET AL: "Authentication and
services access control in a cooperative ad hoc
environment" 5TH INTERNATIONAL
CONFERENCE ON BROADBAND
COMMUNICATIONS, NETWORKS AND
SYSTEMS, 2008. BROADNETS 2008., 8
septembre 2008 (2008-09-08), pages 32-39,
XP031414717 IEEE, PISCATAWAY, NJ, USA
ISBN: 978-1-4244-2391-0**

## Description

La présente invention concerne les réseaux de communications mobiles, comme notamment les réseaux véhiculaires, et plus particulièrement la phase d'authentification d'un terminal mobile dans un tel réseau.

La demande de brevet US 2008/0083022 et le document "Authentication and Services Access Control in a Cooperative Adhoc Environment" de H. Moustafa et C. Bourdon, publié dans les actes de la conférence BROADNETS 2008, divulguent des procédés d'authentification d'un terminal mobile dans des réseaux adhoc.

Les réseaux véhiculaires permettent d'offrir une pléiade de services aux conducteurs de véhicules ainsi qu'à leurs passagers, comme notamment des services liés à la sécurité routière et à la conduite coopérative, permettant ainsi de signaler une éventuelle collision, ou encore un incendie, ou un éboulement. De tels réseaux permettent également d'offrir des services de navigation sur le réseau Internet pour des jeux en ligne, ou encore pour découvrir des prestations proposées dans une zone géographique traversée.

Dans une architecture classique d'un réseau véhiculaire de type DSRC (pour 'Dedicated Short Range Communications' en anglais), une phase d'authentification de l'utilisateur est mise en oeuvre avant d'autoriser l'accès à un service offert par ce réseau véhiculaire.

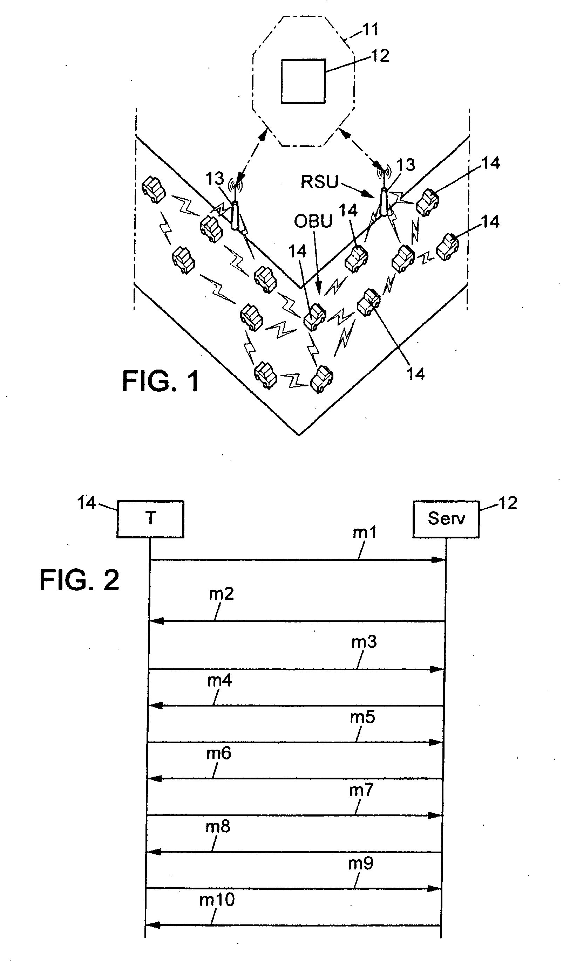

La figure 1 illustre une telle architecture de réseau véhiculaire. Un tel réseau comprend un réseau d'accès 11 par lequel un utilisateur du réseau véhiculaire peut accéder à des services. Il comprend en outre des équipements de réseau fixes 13 RSU (pour 'Road-Side Units' en anglais), ainsi que des équipements mobiles 14, ici embarqués sur les véhicules, OBU (pour 'On Board Unit' en anglais).

Le réseau d'accès 11 comprend un serveur d'authentification 12 qui a en charge l'authentification d'un OBU 14 qui souhaite avoir accès à un service du réseau considéré. Une telle étape d'authentification permet de gérer l'accès aux ressources, ainsi qu'aux services offerts dans le réseau, sur la base de droits d'accès des OBUs.

L'architecture proposée et illustrée par la figure 1 est une architecture de réseau ad-hoc hybride dans laquelle les véhicules, ou OBUs, communiquent avec l'infrastructure fixe, et notamment avec le serveur d'authentification pendant la phase d'authentification, à travers les points d'accès, ou RSUs.

La communication entre un véhicule mobile OBU 14 et un point d'accès RSU 13 peut être réalisée soit directement entre OBU et RSU, soit encore par un ou plusieurs sauts d'OBUs. En effet, un véhicule se trouvant dans la zone de couverture d'un point d'accès RSU est en mesure de communiquer directement avec ce dernier, alors qu'un véhicule qui est situé en dehors de la zone de couverture de cet RSU ne peut communiquer directement avec ce RSU, mais peut communiquer avec lui via un ou plusieurs OBU, un lien entre deux OBUs correspondant à un saut. Dans ce dernier cas, les OBUs utilisés en cas de sauts sont en charge de relayer la communication entre un autre OBU 14 et le point d'accès RSU 13.

La mise en place d'une authentification via des sauts d'OBU en OBU permet aux OBUs ne se trouvant pas dans la zone de couverture des points d'accès RSUs de s'authentifier auprès du serveur d'authentification et d'accéder aux services du réseau, qui eux d'ailleurs peuvent éventuellement être disponibles en dehors de la zone de couverture des RSUs. Une telle authentification permet de déployer les points d'accès RSUs de manière efficace, puisqu'il pourrait être particulièrement onéreux de prévoir que tous les OBUs se situent dans des zones de couverture des points d'accès RSUs.

Toutefois, dans une telle architecture, l'authentification subit une dégradation qui augmente avec la densité des véhicules OBUs. Ainsi, dès que la densité des véhicules est importante, le trafic de données dans le réseau devient important, le nombre de liens de communication à plusieurs sauts augmente, et les échecs d'authentification se multiplient. Il en résulte une dégradation de la qualité de service, ainsi qu'une dégradation de la continuité de service.

La présente invention vient améliorer la situation.

Un premier aspect de la présente invention propose un procédé d'authentification d'au moins un terminal mobile dans un réseau mobile de transmission par paquet comprenant un réseau d'accès en charge d'effectuer une authentification dudit terminal mobile et au moins un point d'accès audit réseau d'accès ;

un compteur, géré au niveau d'un serveur d'authentification dudit réseau d'accès, indiquant un nombre de requêtes d'authentification déjà reçues ;

ledit procédé comprenant les étapes suivantes au niveau dudit réseau d'accès :

/1/ recevoir une requête d'authentification depuis ledit terminal mobile ;
/2/ incrémenter le compteur de la valeur 1 ;
/3/ authentifier le terminal mobile et comparer le nombre indiqué par le compteur

avec une valeur seuil et, sur la base de cette comparaison, décider d'autoriser le terminal mobile authentifié à jouer le rôle du serveur d'authentification du réseau d'accès pour effectuer au moins une authentification d'un autre terminal mobile.

En procédant ainsi, on est en mesure de distribuer la mise en oeuvre d'une étape d'authentification d'un terminal mobile dans certaines conditions, c'est-à-dire lorsque le nombre de requêtes d'authentification reçues indiqué par le compteur dépasse une valeur seuil. Ainsi, on est capable de déléguer la mise en oeuvre d'une étape d'authentification à un terminal mobile qui est authentifié, dès lors que le nombre de requêtes d'authentification reçues au niveau du réseau d'accès est considéré comme trop important.

En distribuant ainsi l'étape d'authentification pour autoriser aux terminaux mobiles l'accès aux ressources du réseau, on peut avantageusement réduire l'occupation de la bande passante et de ce fait augmenter la qualité de service offerte aux terminaux mobiles de ce réseau en évitant des échecs d'authentification. On peut en outre éviter une surcharge au niveau du réseau d'accès.

De telles caractéristiques peuvent avantageusement être mises en oeuvre dans tout type de réseau de communication mobile, et notamment les réseaux mobiles à fort dynamisme comme le sont les réseaux véhiculaires.

Dans ce type de réseau mobile, la densité des terminaux peut varier rapidement dans le temps. Ainsi, la bande passante radio d'un réseau d'accès peut être submergée sur une période de temps par des requêtes d'authentification des terminaux mobiles qui sont situés dans sa zone géographique. Dans ce cas, il est possible que certaines authentifications échouent. En distribuant l'authentification de terminaux mobiles au niveau d'un autre terminal mobile, la bande passante du réseau d'accès se trouve être allégée de cette charge et les authentifications dont il a encore la charge peuvent être effectuées dans de bonnes conditions au niveau du réseau d'accès.

Par la suite, une fois qu'un terminal mobile a reçu l'autorisation de remplir les fonctions de serveur d'authentification, il est en mesure d'authentifier tous les terminaux mobiles desquels il reçoit une requête d'authentification.

Dans un réseau véhiculaire, un terminal mobile qui n'est pas dans la zone de couverture d'un point d'accès peut transmettre une requête d'authentification au réseau d'accès via un autre terminal mobile qui, lui, est situé dans la zone de couverture d'un point d'accès au réseau d'accès, ou qui lui-même a accès au réseau d'accès via un ou plusieurs autres terminaux mobiles. Avantageusement, n'importe quel terminal mobile d'un tel réseau peut potentiellement être autorisé par le réseau d'accès à effectuer une authentification d'un autre terminal mobile, dès lors qu'il est lui-même authentifié et qu'il se trouve sur le lien de communication entre le terminal mobile ayant fait la requête d'authentification et le réseau d'accès considéré. Ainsi, dès qu'un terminal mobile, qui est en charge de relayer des paquets entre un autre terminal mobile et le réseau d'accès, reçoit une requête d'authentification, il peut contrôler s'il est autorisé à authentifier ce terminal mobile, et si tel est le cas, effectue son authentification en local sans transmettre la requête d'authentification reçue en direction du réseau d'accès.

Cette distribution de la fonction d'authentification au niveau de terminaux mobiles du réseau peut avantageusement être mise en oeuvre de manière flexible de sorte à s'adapter aux changements de densité de terminaux mobiles dans la zone géographique considérée.

Afin de prendre en compte les changements de densité en fonction du temps, on peut prévoir d'observer les variations de certains paramètres sur une période de temps donnée.

Dans un mode de réalisation de la présente invention, la valeur seuil est déterminée en fonction d'une distance moyenne seuil entre deux terminaux mobiles du réseau et d'une vitesse moyenne des terminaux mobiles dans le réseau d'accès sur une période de temps donnée.

En prenant ainsi en compte ces deux paramètres que sont la distance moyenne seuil entre deux terminaux mobiles et la vitesse moyenne des terminaux mobiles du réseau, il est possible de déterminer une valeur seuil qui reflète la densité seuil des terminaux mobiles dans le réseau.

Dans un mode de réalisation de la présente invention, la valeur seuil vérifie l'équation suivante :

$$V_{seuil} = \frac{(D \times Vit_{moy})}{Id}$$

où D exprime la période de temps déterminée ;
où $Vit_{moy}$ exprime une vitesse moyenne des terminaux mobiles dans le réseau ; et
où Id représente une distance moyenne seuil entre des terminaux mobiles du réseau.

Ainsi, en comparant le nombre de requêtes d'authentification avec la valeur seuil obtenue ici, la décision de distribuer l'authentification sur un terminal mobile peut être prise de manière pertinente.

La vitesse moyenne peut être déterminée sur la base d'informations reçues depuis le ou les points d'accès.

Dans un mode de réalisation de la présente invention, on peut prévoir les étapes suivantes au niveau dudit point d'accès :

/a/ recevoir un nouveau paquet depuis un terminal mobile ;
/b/ incrémenter le premier compteur de la valeur 1 et incrémenter le second compteur de la valeur de vitesse indiquée dans ledit nouveau paquet;

dans lequel, les étapes /a/ et /b/ sont effectuées sur une période de temps donnée, puis le nombre de paquets indiqué par le premier compteur et la valeur de vitesse indiquée par le second compteur sont transmises au réseau d'accès.

En procédant ainsi, le réseau d'accès peut calculer une vitesse moyenne des terminaux mobiles dans le réseau. En effet, il lui suffit de diviser la valeur de vitesse transmise par le point d'accès par le nombre de paquets indiqué par le point d'accès.

On peut avantageusement envisager que le réseau d'accès fasse une telle moyenne de vitesse de terminaux mobiles dans le réseau en se basant sur toutes les informations remontées ainsi depuis les points d'accès.

A la fin de la période de temps donnée, les premier et second compteurs peuvent être initialisés à la valeur zéro. Ainsi on dispose d'informations sur des plages temporelles définies, ce qui permet d'adapter la mise en oeuvre du procédé aux grandes variations de densités que peuvent présenter des réseaux de type véhiculaire.

Afin de gérer cette distribution de la fonction d'authentification de manière dynamique et flexible, le compteur de requêtes d'authentification peut être mis à zéro après la période de temps donnée.

Dans un mode de réalisation de la présente invention, la distance moyenne seuil entre deux terminaux mobiles du réseau vérifie l'équation suivante :

$$Id_{med} = (Id_{min1} + Id_{min2})/2 \qquad (3)$$

où $Id_{min1}$ vérifie l'équation suivante :

$$Id_{min1} = R/(2)^{(2*InterAPDist-10R)/10R} \qquad (1)$$

où $Id_{min2}$ vérifie l'équation suivante :

$$Id_{min2} = \tfrac{3}{4} * R \qquad (2)$$

avec R indiquant une portée de transmission d'un terminal mobile ; et InterAPDist correspondant à une distance moyenne entre les différents points d'accès dans le réseau.

Un terminal mobile peut être autorisé à remplir les fonctions de serveur d'authentification, c'est-à-dire autorisé à effectuer une authentification d'un autre terminal mobile pour une durée déterminée.

Un deuxième aspect de la présente invention propose un procédé d'authentification d'au moins un terminal mobile dans un réseau mobile de transmission par paquet comprenant un réseau d'accès en charge d'effectuer une authentification dudit terminal mobile et au moins un point d'accès audit réseau d'accès ;

ledit procédé comprenant les étapes suivantes au niveau dudit terminal mobile :

/1/ émettre une requête d'authentification à destination du réseau d'accès ;

/2/ recevoir un message d'authentification indiquant des paramètres permettant de jouer le rôle d'un serveur d'authentification du réseau d'accès pour effectuer une authentification d'un autre terminal mobile.

Grâce à ces dispositions, un réseau d'accès peut informer un terminal mobile de sa décision de déléguer la mise en oeuvre de l'authentification, et peut donner les moyens à ce terminal mobile d'effectuer une telle authentification ultérieurement.

Ainsi, ce procédé d'authentification au niveau du terminal mobile autorisé à authentifier un autre terminal, peut comprendre en outre les étapes suivantes :

/i/ recevoir une requête d'authentification depuis un autre terminal mobile du réseau ;

/ii/ effectuer l'authentification dudit autre terminal mobile sur la base desdits paramètres reçus dans le message d'authentification depuis le réseau d'accès.

Un troisième aspect de la présente invention propose un serveur d'authentification d'au moins un terminal mobile dans un réseau mobile de transmission par paquet, comprenant des moyens adaptés pour la mise en oeuvre d'un procédé selon le premier aspect de la présente invention.

Un quatrième aspect de la présente invention propose un terminal mobile adapté pour communiquer dans un réseau mobile de transmission par paquet comprenant un réseau d'accès en charge d'effectuer une authentification dudit terminal mobile et au moins un point d'accès audit réseau d'accès, ledit terminal mobile comprenant des moyens pour mettre en oeuvre un procédé selon le deuxième aspect de la présente invention.

Un cinquième aspect de la présente invention propose un système d'authentification d'au moins un terminal dans un réseau mobile de transmission par paquet comprenant un réseau d'accès en charge d'effectuer une authentification dudit terminal mobile, ledit système d'authentification comprenant au moins un serveur d'authentification selon le troisième aspect de la présente invention et un point d'accès au réseau d'accès ; le point d'accès comprenant :

- un premier compteur indiquant un nombre de paquets reçus ;
- un second compteur indiquant une somme des vitesses des terminaux mobiles indiquées dans lesdits paquets reçus ; et
- une unité d'émission adaptée pour transmettre au réseau d'accès les valeurs indiquées dans les premier et second compteurs à la fin d'une période de temps donnée.

Un sixième aspect de la présente invention propose un programme d'ordinateur comportant des instructions pour la mise en oeuvre du procédé selon le premier aspect de la présente invention, lorsque ce programme est exécuté par un processeur.

D'autres aspects, buts et avantages de l'invention apparaîtront à la lecture de la description d'un de ses modes de réalisation.

L'invention sera également mieux comprise à l'aide des dessins, sur lesquels:

- la figure 1 illustre une architecture d'un réseau véhiculaire selon un art antérieur ;
- la figure 2 illustre une mise en oeuvre d'une authentification d'un terminal mobile selon un mode de réalisation de la présente invention ;
- la figure 3 illustre un format de paquet de transport utilisé au cours d'une authentification selon un mode de réalisation de la présente invention ;
- la figure 4 illustre une pile protocolaire utilisée selon un mode de réalisation de la présente invention.
- la figure 5 illustre les principales étapes d'un procédé d'authentification selon un mode de réalisation de la présente invention ;
- la figure 6 illustre des piles protocolaires telles qu'utilisées dans les échanges entre entités du réseau selon un mode de réalisation de la présente invention ; et
- la figure 7 illustre un serveur d'authentification, un point d'accès et un terminal mobile selon un mode de réalisation de la présente invention.

Par la suite, la présente invention est décrite dans son application au réseau véhiculaire tel que celui décrit en figure 1. Le réseau d'accès 11 peut comprendre un ou plusieurs serveurs d'authentification 12. A titre d'illustration seulement, le réseau d'accès ne contient qu'un serveur d'authentification mais il est aisé d'adapter la description qui suit au cas où il comprend plusieurs serveurs d'authentification.

Dans un mode de réalisation de la présente invention, la distribution de la fonction d'authentification est contrôlée par le serveur d'authentification.

On peut prévoir de mettre en oeuvre un procédé d'authentification selon un mode de réalisation de la présente invention en utilisant une authentification de type AUCRED (pour 'AUthentication and CREdential Delivery') tel que décrit dans le document 'Performance Analysis of a Layer-2 Multi-Hop Authentication and Credential Delivery Scheme for Vehicular Networks', de C. TCHEPNDA et al., publié dans les actes de la conférence VTC 2008.

La figure 2 décrit un échange de message pour la mise en oeuvre d'une authentification selon un protocole de type AUCRED.

Selon un tel protocole, le terminal mobile (ou 'OBU') 14 transmet à destination du serveur d'authentification 12 un message m1 indiquant au serveur d'authentification des paramètres de sécurité, tels que des paramètres relatifs à des algorithmes de cryptographie.

Puis, un témoin (ou 'cookie' en anglais) est échangé entre le serveur d'authentification et le terminal mobile 14 selon des messages m2 et m3, ce cookie étant destiné à parer à d'éventuelles attaques de déni de service (en anglais, Denial Of Service (DoS)) instiguées par le terminal au détriment du serveur d'authentification ou d'un autre terminal.

Un message m4 émis par le serveur d'authentification indique les services qui sont offerts au terminal mobile 14. Un message m5 émis par le terminal mobile 14 comprend des certificats de client. En réponse, le serveur 12 envoie un message m6 indiquant des paramètres pour un certificat temporaire de client, tels qu'une identification de client, une date d'expiration, une taille de clé, des algorithmes de cryptographie, des droits d'accès ... Ce message m6 contient aussi le certificat du serveur, associé à la clé privée du serveur, la clé privée étant utilisée pour signer le certificat temporaire du client.

En réponse, le terminal mobile émet un message m7 qui indique des certificats temporaires non signés. Puis, dans le message m8, le serveur répond au message m7, en retournant au terminal mobile les certificats temporaires signés. Le terminal mobile accuse réception des certificats temporaires signés par un message m9. Enfin, le serveur d'authentification émet un message m10 pour clôturer une authentification.

Selon l'invention, dans le message m6, le serveur indique au terminal mobile qu'il lui délègue certains de ses privilèges, en particulier celui relatif à l'authentification d'autres terminaux. Dans le cas d'une délégation, le terminal mobile, auquel de tels privilèges ont été délégués, joue alors le rôle du serveur d'authentification lors d'une authentification d'un autre terminal mobile. Les échanges tels que décrits précédemment se réalisent de façon analogue.

Toutefois, dans un mode de réalisation de la présente invention, on n'autorise pas le terminal mobile à déléguer à son tour de tels privilèges à un autre terminal mobile. Optionnellement, on peut envisager qu'un terminal mobile autorisé à exercer les fonctions d'un serveur d'authentification puisse déléguer ses privilèges à un ou plusieurs autres terminaux mobiles, en spécifiant le nombre limite de délégations possibles.

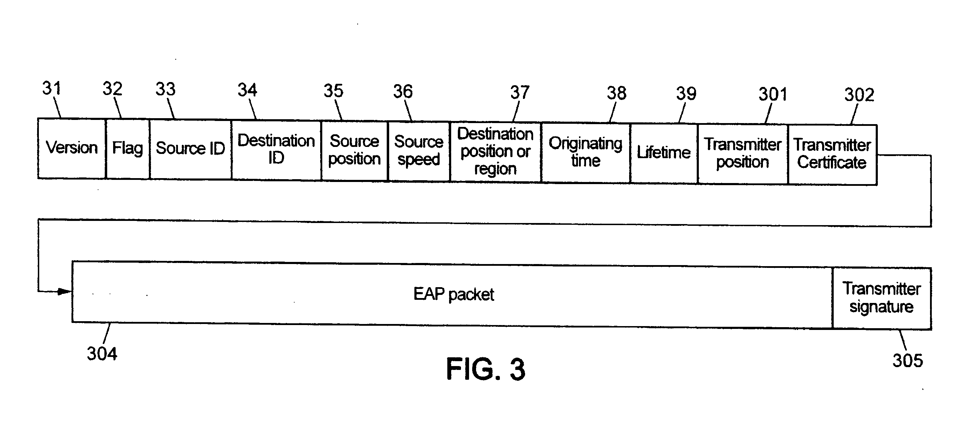

La figure 3 illustre un format de paquet selon un protocole de type EGEMO (pour 'EAP GEographic and positioning encapsulation for Multi-hop transport'), tel que décrit dans le document 'Performance Analysis of a Layer-2 Multi-Hop Authentication and Credential Delivery Scheme for Vehicular Networks', transportant les messages d'authentification selon un mode de réalisation de la présente invention.

Un tel paquet comprend un champ 31 indiquant une version du protocole, un champ 32 indiquant des informations de contrôle, deux champs 33 et 34 indiquant un identifiant de la source et un identifiant de la destination, un champ 35 indiquant la position de la source, un champ 36 indiquant une vitesse de la source, un champ 37 indiquant une position de la destination, un champ 38 indiquant une référence temporelle d'origine, un champ 39 indiquant une durée de vie, un champ 301 indiquant une position du transmetteur, un champ 302 indiquant un certificat du transmetteur, un champ 304 contenant un paquet selon le protocole EAP (pour 'Extensible Authentification Protocol' tel que défini dans la RFC 3748 de l'IETF) et un champ 305 indiquant une signature du transmetteur.

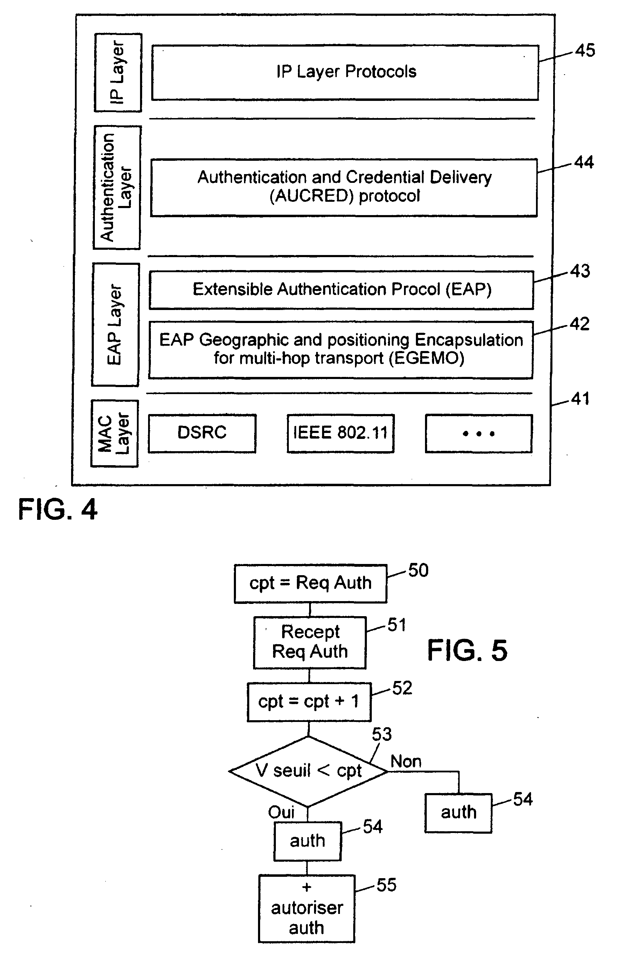

La figure 4 illustre une pile protocolaire telle qu'utilisée dans les échanges entre entités du réseau selon un mode de réalisation de la présente invention.

Cette pile protocolaire comprend une couche 41, au niveau de la couche MAC (pour 'Medium Access Control' en anglais), qui peut correspondre à différents protocoles selon la mise en oeuvre de la présente invention. Ces protocoles peuvent notamment être un protocole de type DSRC (pour 'Dedicated Short Range Communications'), dans le contexte des réseaux véhiculaires, ou encore un protocole de type IEEE 802.11 dans le contexte des réseaux de type WIFI.

Cette pile comprend des couches 42 et 43 au niveau de la couche protocolaire EAP, la couche 42 correspondant à la couche du protocole EGEMO et la couche 43 correspondant à la couche de protocole EAP.

Puis, une couche de protocole d'authentification 44 correspond au protocole AUCRED. Cette pile protocolaire est située en deçà de la couche de protocole IP 45.

Le transport du protocole AUCRED est ici assuré par le protocole EGEMO qui permet de réaliser, au dessus de la couche 2 du modèle OSI (pour 'Open Systems Interconnection' en anglais), un transport multi-sauts sécurisé des paquets d'authentification EAP. La technique de transport développée par le protocole EGEMO est basée sur la diffusion et l'acheminement géographique et opportuniste des paquets EAP comme décrit dans le document "Performance Analysis of a Layer-2 Multi-Hop Authentication and Credential Delivery Scheme for Vehicular Networks ". Le protocole EGEMO est alors sans état puisqu'il ne se base pas sur des tables de routage. Cette propriété du protocole EGEMO est particulièrement adaptée aux réseaux à forte dynamique.

La figure 5 illustre les principales étapes d'un procédé d'authentification selon un mode de réalisation de la présente invention. A une étape 50, un compteur, géré de préférence au niveau d'un serveur d'authentification du réseau d'accès 11, indique un nombre de requêtes d'authentification déjà reçue soit au niveau du serveur d'authentification, soit encore au niveau global du réseau d'accès 11. A cet effet, il est donc prévu d'incrémenter de 1 ce compteur sur réception de chaque requête d'authentification. On peut prévoir de remettre à zéro ce compteur régulièrement pour mettre en oeuvre un procédé d'authentification selon un mode de réalisation de l'invention flexible et adapté aux évolutions de densité du réseau avec le temps.

A une étape 51, une requête d'authentification est reçue au niveau du serveur d'authentification, depuis ledit terminal mobile. Le compteur est de ce fait incrémenté de la valeur 1 à une étape 52.

Puis, afin de décider de manière pertinente s'il est préférable que la fonction d'authentification soit distribuée sur un terminal mobile, la valeur indiquée par le compteur est comparée avec une valeur seuil à une étape 53. Quelque soit le résultat de cette comparaison, l'authentification du terminal mobile considéré est effectuée au niveau du serveur d'authentification. Toutefois, en fonction du résultat de cette comparaison, à une étape 55, il est décidé d'autoriser ou non ce terminal mobile à effectuer des authentifications ultérieures d'autres terminaux mobiles. Plus précisément, si la valeur indiquée par le compteur est supérieure à la valeur seuil, on décide d'autoriser le terminal mobile authentifié à procéder à des authentifications ultérieures d'autres terminaux mobiles.

En procédant ainsi, on est en mesure de garantir un niveau de disponibilité de l'accès aux ressources et aux services offerts dans le réseau, et cela même dans un contexte de forte mobilité des terminaux mobiles puisqu'un tel procédé d'authentification est flexible dans le temps, et peut s'adapter en fonction des variations de densité des terminaux mobiles.

La distribution de la fonction d'authentification sur un ou plusieurs terminaux mobiles est ici mise en oeuvre par le serveur d'authentification. Par mesure de sécurité, seul un terminal mobile déjà authentifié peut être autorisé à effectuer une authentification ultérieure d'un autre terminal mobile.

Il convient de noter que, lorsqu'une authentification d'un terminal mobile est effectuée par un autre terminal mobile, ces deux terminaux mobiles étant géographiquement proches, le temps de propagation du trafic des messages liés à cette authentification est alors limité. Cette caractéristique contribue à garantir un certain niveau des performances de l'authentification, notamment dans les cas de forte densité de véhicules.

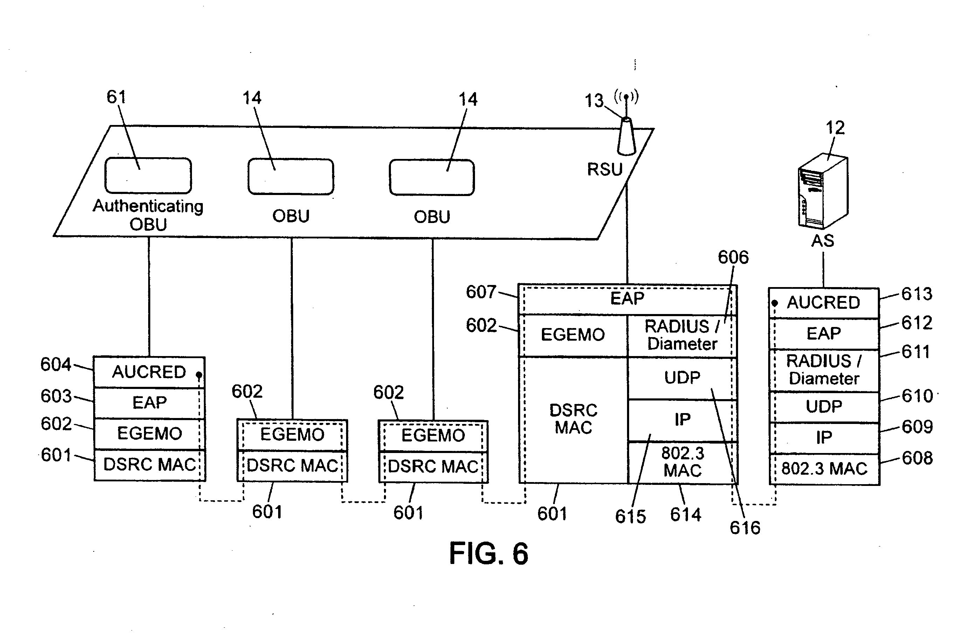

La figure 6 illustre la mise en oeuvre des différentes couches protocolaires dans un réseau véhiculaire selon un mode de réalisation de la présente invention.

Ce réseau comprend deux OBUs 14 et un OBU 61 qui, lui, est en cours d'authentification avec le réseau d'accès duquel il recevra l'autorisation d'authentifier d'autres OBUs du réseau selon un mode de réalisation de la présente invention. Ce réseau comprend également un point d'accès 13 et un serveur d'authentification 12.

La pile protocolaire mise en oeuvre au niveau de l'OBU 61 comprend une couche 601 'DSRC MAC', une couche 602 'EGEMO', une couche 603 'EAP', et une couche 604 'AUCRED'.

La pile protocolaire mise en oeuvre au niveau des OBUs 14 comprend une couche 601 'DSRC MAC' et une couche 602 'EGEMO', ainsi que les couches 603 et 604 non illustrées ici.

Dans un mode de réalisation de la présente invention, deux piles protocolaires sont mises en oeuvre au niveau du point d'accès, une pile protocolaire pour des communications sans fil et une pile protocolaire pour les communications filaires. La pile protocolaire pour les communications sans fil comprend une couche 'DSRC MAC' 601, une couche EGEMO 602 et une couche EAP 607. La pile protocolaire pour les communications filaires comprend quant à elle une couche '802.3 MAC' 614, une couche IP 615, une couche UDP 616, une couche Radius ou Diameter 606 et une couche EAP 607. La transition d'un paquet du réseau sans fil au réseau filaire, et inversement, se fait ici via la couche EAP 607 qui est commune aux deux piles.

Enfin, au niveau du serveur d'authentification, une pile protocolaire comprend une couche 608 '802.3 MAC', une couche 609 'IP', une couche 610 'UDP', une couche 611 'Radius/Diameter', une couche 612 EAP, et une couche 611 'AUCRED'.

Dans un mode de réalisation, un serveur d'authentification autorise un OBU, à l'occasion de son authentification ou de sa réauthentification, à jouer le rôle d'un serveur d'authentification, lorsqu'un certain seuil est dépassé, en nombre de requêtes d'authentification. Plus précisément, l'OBU est investi des privilèges du serveur d'authentification lorsque le nombre de requêtes d'authentification (ou de réauthentification) reçues par le serveur d'authentification sur une période de temps donnée, ou encore période d'observation, dépasse le nombre de requêtes d'authentification qu'aurait reçu le serveur d'authentification pour une densité déterminée de terminaux mobiles.

Les taux de succès d'une authentification commencent à décliner lorsque la distance entre terminaux mobiles, ou encore distance inter-véhicules pour un réseau véhiculaire, qui reflète une densité des véhicules dans le réseau, est inférieure à une première valeur seuil de distance minimale $Id_{min1}$ vérifiant l'équation suivante :

$$Id_{min1} = R/(2)^{(2*interAPDist-10R)/10R} \qquad (1)$$

où R correspond à la portée de transmission des terminaux mobiles dans le réseau ; et
où InterAPDist correspond à une distance moyenne entre les différents points d'accès dans le réseau.

Par ailleurs, des délais dans l'exécution d'une phase d'authentification deviennent trop importants lorsqu'une distance inter-véhicules dans le réseau est inférieure à une seconde valeur seuil minimale $Id_{min2}$ vérifiant l'équation suivante :

$$Id_{min2} = \tfrac{3}{4}*R \qquad (2)$$

Dans ce contexte, une densité limite de véhicules pourrait correspondre à une distance inter-véhicules égale au minimum de ces deux valeurs seuil minimales ou encore au maximum de ces deux valeurs seuil minimales.

On peut également considérer que la densité limite correspond à une distance inter-véhicules médiane $Id_{med}$, c'est-à-dire vérifiant l'équation suivante :

$$Id_{med}=(Id_{min1} + Id_{min2})/2 \qquad (3)$$

Par ailleurs, dans un mode de réalisation de la présente invention, chaque point d'accès 13, ou RSU, maintient à jour un premier compteur indiquant le nombre de paquets transitant par lui selon le protocole EGEMO par exemple, et un second compteur indiquant une somme des vitesses correspondantes, c'est à dire la somme des valeurs des vitesses qui sont indiquées dans chacun de ces paquets.

Ces premier et second compteurs sont mis à jour sur une période de temps donnée. Chaque point d'accès 13 envoie ensuite au serveur d'authentification 12, à l'expiration de la période d'observation, les valeurs indiquées dans les premier et second compteurs. Ainsi, le serveur d'authentification reçoit régulièrement le nombre de paquets de type EGEMO reçus par tous les points d'accès qui lui correspondent, ainsi que la somme des vitesses correspondantes.

Ainsi, au niveau d'un point d'accès 13, les étapes suivantes sont mises en oeuvre:

- sur réception de chaque paquet reçu, incrémenter de la valeur 1 le compteur de paquets et incrémenter le compteur de vitesse avec la valeur de vitesse indiquée dans ledit paquet reçu, cette valeur de vitesse pouvant être indiquée dans le champ 36 du message illustré à la figure 3 ;
- initialiser à zéro les deux compteurs à chaque début de période d'observation ; et
- transmettre les valeurs indiquées par les deux compteurs à destination du serveur d'authentification à chaque fin de période d'observation.

Pour effectuer cette dernière étape, on peut transmettre les valeurs des deux compteurs via un paquet de type RADIUS ou Diameter depuis un point d'accès au serveur d'authentification.

Ainsi, à la fin de chaque période d'observation, le serveur d'authentification reçoit de tous les points d'accès communiquant avec lui, le nombre de paquets, de type EGEMO par exemple, qu'ils ont reçus et la somme des vitesses correspondantes. Le serveur d'authentification peut ainsi calculer la vitesse moyenne des terminaux mobiles, ou véhicules, dans le réseau et en déduire une valeur seuil de requêtes d'authentification qui, dans un mode de réalisation de la présente invention, correspond à une densité limite de véhicules prédéterminée.

Cette densité limite de véhicules peut correspondre de manière pertinente à une distance inter-véhicules moyenne seuil dans le réseau véhiculaire.

Cette valeur seuil de requêtes d'authentification peut vérifier l'équation suivante :

$$V_{seuil} = (D \times V_{moy})/Id \qquad (4)$$

où *Id* est une distance inter-véhicules seuil, qui peut par exemple vérifier l'une des équations précédentes (1) ou (2) ou (3) ; où *AveSpeed* est la vitesse moyenne des véhicules dans le réseau ; et où *D* est la période d'observation, ou période de temps donnée.

Sur la base de la valeur seuil $V_{seuil}$ ainsi déterminée, le serveur d'authentification peut désormais décider ou non de distribuer la fonction d'authentification à un ou plusieurs terminaux mobiles. Ainsi, à l'occasion de l'authentification d'un terminal mobile, et avant de générer des paramètres ou attributs des certificats temporaires dans le message AUCRED m6, le serveur d'authentification compare le nombre de requêtes d'authentification effectivement mesuré sur la dernière période d'observation à la valeur seuil de requêtes d'authentification calculée $V_{seuil}$ correspondant à cette même période de temps.

Si le nombre de requêtes d'authentification comptées au niveau du serveur d'authentification est supérieur à la valeur seuil $V_{seuil}$ calculée, alors le serveur d'authentification décide d'attribuer le rôle de serveur d'authentification au terminal mobile qui est en cours d'authentification. Dans un mode de réalisation de la présente invention, cette décision est notifiée au terminal mobile concerné dans les attributs des certificats temporaires qu'envoie le serveur au terminal mobile. Au terme de cette authentification, le terminal mobile dispose de certificats temporaires signés par le serveur d'authentification lui conférant le privilège de pouvoir mettre en oeuvre une authentification.

Au niveau d'un serveur d'authentification, pour tout paquet de type EAP reçu par exemple via RADIUS ou Diameter depuis un point d'accès et correspondant à une requête d'authentification ou encore de réauthentification, on met à jour le compteur de requêtes en l'incrémentant de la valeur 1. Ce compteur est remis à zéro en fin, ou en début de période d'observation.

En fin de période d'observation, le serveur d'authentification reçoit, de tous les points d'accès avec lesquels il communique, le nombre de paquets EGEMO que chacun de ces points d'accès a reçu, et les vitesses cumulées relatives à ces paquets.

Sur la base de ces informations, le serveur d'authentification est en mesure de calculer une vitesse moyenne $V_{moy}$ des terminaux mobiles du réseau selon l'équation suivante :

$$V_{moy} = \sum_{i=1}^{n} cpt_{1,i} \, / \sum_{i=1}^{n} cpt_{2,i}$$

où $cpt_{1,i}$ est la valeur indiquée par le premier compteur et envoyée par le point d'accès i ;

où $cpt_{2,i}$ est la valeur indiquée par le second compteur et envoyée par le point d'accès i

pour i compris entre 1 et n, lorsque le réseau d'accès communique avec n points d'accès 13.

On détermine alors $V_{seuil}$ selon l'équation (4).

Puis, on décide comme décrit ci-avant d'autoriser le terminal mobile en cours d'authentification à effectuer des authentifications d'autres terminaux par lui-même ultérieurement.

Un terminal mobile autorisé à jouer le rôle du serveur d'authentification peut alors répondre directement à un autre terminal mobile depuis lequel il reçoit une requête d'authentification et effectue cette authentification à la place du serveur d'authentification. Dans ce contexte, il est prévu qu'un terminal mobile n'accepte d'être authentifié par un autre terminal mobile seulement si ce dernier lui présente des certificats temporaires dont les attributs confèrent les privilèges requis, ces attributs ayant été renseignés dans le message m6 et les certificats temporaires associés à ces attributs reçus dans le message m8.

Le serveur d'authentification peut ainsi distribuer ses fonctions jusqu'à ce que le nombre de requêtes d'authentification reçues passe en dessous de la valeur seuil $V_{seuil}$. Ensuite, les terminaux mobiles ainsi investis du rôle de serveur d'authentification conservent ce rôle temporairement, par exemple jusqu'à leur prochaine authentification ou réauthentification au cours de laquelle le serveur d'authentification prendra en compte les nouvelles conditions pour décider de distribuer son rôle ou non comme décrit ci-avant.

Ainsi la distribution de la fonction d'authentification reste temporaire. On peut prévoir qu'elle soit effective pendant une période de validité des certificats temporaires qui confèrent ce privilège.

Dans un mode de réalisation de la présente invention, il est prévu de lisser la valeur du compteur du nombre de requêtes d'authentification ainsi que la valeur seuil $V_{seuil}$ de manière à tenir compte des valeurs correspondantes dans les périodes d'observation précédentes. En procédant ainsi, on est en mesure de pondérer l'évolution de ces valeurs, et d'éviter ainsi une trop grande variation des valeurs ainsi mesurées ou calculées d'une période d'observation à l'autre. Dans ce cas, on peut prévoir que, à la fin de chaque période d'observation, une valeur V, que ce soit une valeur mesurée comme le compteur $cpt_{1,l}$ ou $cpt_{2,l}$ ou une valeur calculée comme la valeur seuil $V_{seuil}$, est pondérée comme suit:

$$V = \alpha \times V_{new} + (1 - \alpha) \times V_{old}$$

où $\alpha$ est un facteur de pondération compris entre 0 et 1 strictement ;

où $V_{new}$ est la valeur considérée, calculée ou mesurée, sur la période d'observation qui vient de s'écouler ;

où $V_{old}$ est la valeur considérée, calculée ou mesurée, sur la période d'observation précédant celle qui vient de s'écouler.

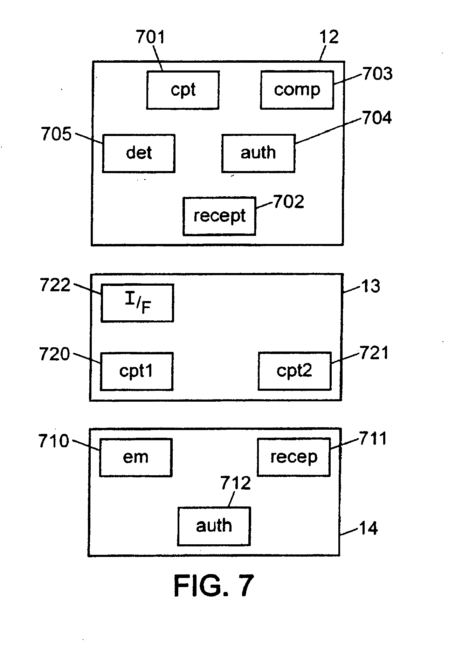

La figure 7 illustre un serveur 12, un point d'accès 13 et un terminal mobile 14 selon un mode de réalisation de la présente invention.

Le serveur d'authentification 12 comprend :

- un compteur 701 indiquant un nombre de requêtes d'authentification reçues ;
- une unité de réception 702 adaptée pour recevoir une requête d'authentification depuis le terminal mobile ;
- une unité de comparaison 703 adaptée pour comparer le nombre indiqué par le compteur avec une valeur seuil ;
- une unité d'authentification 704 adaptée pour authentifier le terminal mobile et, pour décider, sur la base de l'unité de comparaison, d'autoriser le terminal mobile authentifié à jouer le rôle de l'unité d'authentification pour effectuer une authentification d'un autre terminal mobile.

Le serveur d'authentification peut en outre comprendre une unité de détermination 705 adaptée pour déterminer la valeur seuil, sur une période de temps donnée, en fonction d'une distance moyenne seuil entre deux terminaux mobiles du réseau et d'une vitesse moyenne des terminaux mobiles dans le réseau.

Un terminal mobile 14 selon un mode de réalisation de la présente invention comprend :

- une unité d'émission 710 adaptée pour émettre une requête d'authentification à destination du réseau d'accès ;
- une unité de réception 711 adaptée pour recevoir un message d'authentification indiquant des paramètres permettant d'effectuer une authentification d'un autre terminal mobile ; et
- une unité d'authentification 712 adaptée pour jouer le rôle du réseau d'accès pour authentifier un autre terminal mobile.

Un point d'accès 13 à un réseau d'accès selon un mode de réalisation de la présente invention comprend :

- un premier compteur 720 indiquant un nombre de paquets reçus ;
- un second compteur 721 indiquant une somme des vitesses des terminaux mobiles indiquées dans lesdits paquets reçus ; et
- une unité d'émission 722 adaptée pour transmettre au réseau d'accès les valeurs indiquées dans les premier et second compteurs à la fin d'une période de temps donnée.

Grâce aux caractéristiques décrites ici, on est en mesure de gérer la disponibilité de l'authentification et par conséquent de l'accès aux ressources et aux services du réseau de manière pertinente de façon à augmenter les taux de succès d'authentification et à réduire de manière significative des délais d'authentification notamment dans les cas de forte densité de véhicules.

De plus, en délocalisant ainsi l'étape d'authentification, on peut réduire le temps de propagation du trafic relatif à cette authentification, et de ce fait augmenter le débit disponible dans le réseau.

Un mode de réalisation de la présente invention peut être mis en oeuvre avantageusement à la fois dans des réseaux ad-hoc hybrides et dans des réseaux non ad-hoc.

Il est aisé de mettre en oeuvre un tel procédé pour la mise en oeuvre de services centralisés différents de l'authentification.

## Revendications

1.  Procédé d'authentification d'au moins un terminal mobile (14) dans un réseau mobile de transmission par paquet comprenant un réseau d'accès (11) en charge d'effectuer une authentification dudit terminal mobile et au moins un point d'accès (13) audit réseau d'accès (11) ;

    un compteur, géré au niveau d'un serveur d'authentification (12) dudit réseau d'accès (11), indiquant un nombre de requêtes d'authentification déjà reçues ;

    ledit procédé comprenant les étapes suivantes au niveau dudit réseau d'accès :

    /1/ recevoir (21) une requête d'authentification depuis ledit terminal mobile ;
    /2/ incrémenter (22) le compteur de la valeur 1 ;
    /3/ authentifier (24) le terminal mobile, comparer (23) le nombre indiqué par le compteur avec une valeur seuil, et sur la base de cette comparaison, décider d'autoriser (25) le terminal mobile authentifié à jouer le rôle du serveur d'authentification du réseau d'accès pour effectuer au moins une authentification d'un autre terminal mobile.

2.  Procédé d'authentification selon la revendication 1, dans lequel la valeur seuil est déterminée, sur une période de temps donnée, en fonction d'une distance moyenne seuil entre deux terminaux mobiles du réseau et d'une vitesse moyenne des terminaux mobiles dans le réseau d'accès.

3.  Procédé d'authentification selon la revendication 2, dans lequel la valeur seuil vérifie l'équation suivante :

$$V_{seuil} = \frac{(D \times Vit_{moy})}{Id}$$

    où D exprime la période de temps donnée ;
    où $Vit_{moy}$ exprime une vitesse moyenne des terminaux mobiles dans le réseau ; et
    où Id représente une distance moyenne seuil entre deux terminaux mobiles du réseau.

4.  Procédé d'authentification selon la revendication 2, dans lequel la vitesse moyenne est déterminée au niveau du réseau d'accès sur la base d'informations reçues depuis ledit au moins un point d'accès (13).

5. Procédé d'authentification selon la revendication 4, comprenant les étapes suivantes au niveau dudit point d'accès :

/a/ recevoir un nouveau paquet depuis un terminal mobile ;
/b/ incrémenter un premier compteur de la valeur 1 et incrémenter un second compteur de la valeur de vitesse indiquée dans ledit nouveau paquet ;
dans lequel, les étapes /a/ et /b/ sont effectuées sur une période de temps donnée, puis le nombre de paquets indiqué par le premier compteur et la valeur de vitesse indiquée par le second compteur sont transmises au réseau d'accès.

6. Procédé d'authentification selon la revendication 2, dans lequel la distance moyenne seuil entre deux terminaux mobiles du réseau vérifie l'équation suivante :

$$Id_{med}=(Id_{min1} + Id_{min2})/2 \qquad (3)$$

où $Id_{min1}$ vérifie l'équation suivante :

$$Id_{min1} = R/(2)^{(2*InterAPDist-10R)/10R} \qquad (1)$$

où $Id_{min2}$ vérifie l'équation suivante :

$$Id_{min2} = \tfrac{3}{4}* R \qquad (2)$$

avec R indiquant une portée de transmission d'un terminal mobile ; et InterAPDist correspondant à une distance moyenne entre les différents points d'accès dans le réseau.

7. Procédé d'authentification selon la revendication 1, dans lequel un terminal mobile est autorisé à effectuer une authentification d'un autre terminal mobile pour une durée déterminée.

8. Procédé d'authentification selon la revendication 5, dans lequel un terminal mobile est autorisé à effectuer une authentification d'un autre terminal mobile pour une durée déterminée, et dans lequel à la fin de la période de temps donnée, les premier et second compteurs sont initialisés à la valeur zéro.

9. Procédé d'authentification d'un terminal mobile (14) dans un réseau mobile de transmission par paquet comprenant un réseau d'accès (11) en charge d'effectuer une authentification dudit terminal mobile et au moins un point d'accès (13) audit réseau d'accès (11) ;
ledit procédé comprenant les étapes suivantes au niveau dudit terminal mobile :

/1/ émettre une requête d'authentification à destination du réseau d'accès ;
/2/ recevoir un message d'authentification indiquant des paramètres permettant au terminal mobile de jouer le rôle d'un serveur d'authentification du réseau d'accès pour effectuer une authentification d'un autre terminal mobile.

10. Procédé d'authentification selon la revendication 9, comprenant en outre les étapes suivantes au niveau du terminal mobile :

/i/ recevoir une requête d'authentification depuis un autre terminal mobile du réseau ;
/ii/ effectuer l'authentification dudit autre terminal mobile sur la base desdits paramètres reçus dans le message d'authentification depuis le réseau d'accès.

11. Serveur d'authentification (12) d'au moins un terminal mobile (14) dans un réseau mobile de transmission par paquet, ledit serveur d'authentification étant accessible par au moins un point d'accès (13) ;

ledit serveur d'authentification comprenant :

- un compteur (701) indiquant un nombre de requêtes d'authentification reçues ;
- une unité de réception (702) adaptée pour recevoir (21) une requête d'authentification depuis le terminal mobile ;
- une unité de comparaison (703) adaptée pour comparer (23) le nombre indiqué par le compteur avec une valeur seuil ;
- une unité d'authentification (704) adaptée pour authentifier (24) le terminal mobile et, pour décider, sur la base de l'unité de comparaison, d'autoriser (25) le terminal mobile authentifié à jouer le rôle de ladite unité d'authentification pour effectuer une authentification d'un autre terminal mobile.

**12.** Serveur d'authentification (12) selon la revendication 11, comprenant en outre une unité de détermination (705) adaptée pour déterminer la valeur seuil, sur une période de temps donnée, en fonction d'une distance moyenne seuil entre deux terminaux mobiles du réseau et d'une vitesse moyenne des terminaux mobiles dans le réseau.

**13.** Terminal mobile (14) adapté pour communiquer dans un réseau mobile de transmission par paquet comprenant un réseau d'accès (11) en charge d'effectuer une authentification dudit terminal mobile et au moins un point d'accès (13) audit réseau d'accès (11) ;
ledit terminal comprenant :

- une unité d'émission (710) adaptée pour émettre une requête d'authentification à destination du réseau d'accès ;
- une unité de réception (711) adaptée pour recevoir un message d'authentification indiquant des paramètres permettant d'effectuer une authentification d'un autre terminal mobile ; et
- une unité d'authentification (712) adaptée pour jouer le rôle d'un serveur d'authentification du réseau d'accès pour authentifier un autre terminal mobile.

**14.** Système d'authentification d'au moins un terminal dans un réseau mobile de transmission par paquet comprenant un réseau d'accès (11) en charge d'effectuer une authentification dudit terminal mobile, ledit système d'authentification comprenant au moins un serveur d'authentification (12) selon la revendication 11 et un point d'accès (13) audit réseau d'accès (11) ;
ledit point d'accès comprenant :

- un premier compteur (720) indiquant un nombre de paquets reçus ;
- un second compteur (721) indiquant une somme des vitesses des terminaux mobiles indiquées dans lesdits paquets reçus ; et
- une unité d'émission (722) adaptée pour transmettre au réseau d'accès les valeurs indiquées dans les premier et second compteurs à la fin d'une période de temps donnée.

**15.** Programme d'ordinateur comportant des instructions pour la mise en oeuvre du procédé selon la revendication 1, lorsque ce programme est exécuté par un processeur.

**Claims**

**1.** Method for authenticating at least one mobile terminal (14) in a packet transmission mobile network comprising an access network (11) responsible for performing an authentication of said mobile terminal and at least one access point (13) to said access network (11);
a counter, managed on an authentication server (12) of said access network (11), indicating a number of authentication requests already received;
said method comprising the following steps in said access network:

/1/ receiving (21) an authentication request from said mobile terminal;
/2/ incrementing (22) the counter by the value 1;
/3/ authenticating (24) the mobile terminal, comparing (23) the number indicated by the counter with a threshold value, and, on the basis of this comparison, deciding to authorize (25) the authenticated mobile terminal to act as the authentication server of the access network to perform at least one authentication of another mobile terminal.

2. Authentication method according to Claim 1, in which the threshold value is determined, over a given time period, according to a threshold average distance between two mobile terminals of the network and an average speed of the mobile terminals in the access network.

3. Authentication method according to Claim 2, in which the threshold value satisfies the following equation:

$$V_{seuil} = \frac{(D \times Vit_{moy})}{Id}$$

in which D expresses the given time period;
in which $Vit_{moy}$ expresses an average speed of the mobile terminals in the network; and
in which Id represents a threshold average distance between two mobile terminals of the network.

4. Authentication method according to Claim 2, in which the average speed is determined in the access network on the basis of information received from said at least one access point (13).

5. Authentication method according to Claim 4, comprising the following steps on said access point:

/a/ receiving a new packet from a mobile terminal;
/b/ incrementing a first counter by the value 1 and incrementing a second counter by the speed value indicated in said new packet;
in which the steps /a/ and /b/ are performed over a given time period, then the number of packets indicated by the first counter and the speed value indicated by the second counter are transmitted to the access network.

6. Authentication method according to Claim 2, in which the threshold average distance between two mobile terminals of the network satisfies the following equation:

$$Id_{med} = (Id_{min1} + ID_{min2})/2 \qquad (3)$$

in which $Id_{min1}$ satisfies the following equation:

$$Id_{min1} = R/(2)^{(2*InterAPDist-10R)10R} \qquad (1)$$

in which $Id_{min2}$ satisfies the following equation:

$$Id_{min2} = \tfrac{3}{4}* R \qquad (2)$$

with R indicating a transmission range of a mobile terminal; and
InterAPDist corresponding to an average distance between the different access points in the network.

7. Authentication method according to Claim 1, in which a mobile terminal is authorized to perform an authentication of another mobile terminal for a determined duration.

8. Authentication method according to Claim 5, in which a mobile terminal is authorized to perform an authentication of another mobile terminal for a determined duration, and in which, at the end of the given time period, the first and second counters are initialized with the value zero.

9. Method for authenticating a mobile terminal (14) in a packet transmission mobile network comprising an access network (11) responsible for performing an authentication of said mobile terminal and at least one access point (13) to said access network (11);
said method comprising the following steps on said mobile terminal:

/1/ sending an authentication request to the access network;

/2/ receiving an authentication message indicating parameters enabling the mobile terminal to act as an authentication server of the access network to perform an authentication of another mobile terminal.

10. Authentication method according to Claim 9, also comprising the following steps on the mobile terminal:

/i/ receiving an authentication request from another mobile terminal of the network;

/ii/ performing the authentication of said other mobile terminal on the basis of said parameters received in the authentication message from the access network.

11. Authentication server (12) for authenticating at least one mobile terminal (14) in a packet transmission mobile network, said authentication server being accessible via at least one access point (13); said authentication server comprising:

- a counter (701) indicating a number of authentication requests received;
- a reception unit (702) suitable for receiving (21) an authentication request from the mobile terminal;
- a comparison unit (703) suitable for comparing (23) the number indicated by the counter with a threshold value;
- an authentication unit (704) suitable for authenticating (24) the mobile terminal and for deciding, on the basis of the comparison unit, to authorize (25) the authenticated mobile terminal to act as said authentication unit to perform an authentication of another mobile terminal.

12. Authentication server (12) according to Claim 11, also comprising a determination unit (705) suitable for determining the threshold value, over a given time period, according to a threshold average distance between two mobile terminals of the network and an average speed of the mobile terminals in the network.

13. Mobile terminal (14) suitable for communicating in a packet transmission mobile network comprising an access network (11) responsible for performing an authentication of said mobile terminal and at least one access point (13) to said access network (11); said terminal comprising:

- a transmission unit (710) suitable for transmitting an authentication request to the access network;
- a reception unit (711) suitable for receiving an authentication message indicating parameters making it possible to perform an authentication of another mobile terminal; and
- an authentication unit (712) suitable for acting as an authentication server of the access network to authenticate another mobile terminal.

14. System for authenticating at least one terminal in a packet transmission mobile network comprising an access network (11) responsible for performing an authentication of said mobile terminal, said authentication system comprising at least one authentication server (12) according to Claim 11 and one access point (13) to said access network (11); said access point comprising:

- a first counter (720) indicating a number of packets received;
- a second counter (721) indicating a sum of the speeds of the mobile terminals indicated in said received packets; and
- a transmission unit (722) suitable for transmitting to the access network the values indicated in the first and second counters at the end of a given time period.

15. Computer program comprising instructions for implementing the method according to Claim 1, when this program is run by a processor.

**Patentansprüche**

1. Verfahren zur Authentifizierung mindestens eines mobilen Endgeräts (14) in einem mobilen Paketübertragungsnetz, das ein Zugangsnetz (11), welches die Aufgabe hat, eine Authentifizierung des mobilen Endgeräts durchzuführen, und mindestens einen Zugangspunkt (13) zum Zugangsnetz (11) enthält; wobei ein Zähler, der im Bereich eines Authentifizierungsservers (12) des Zugangsnetzes (11) gesteuert wird, eine Anzahl von bereits empfangenen Authentifizierungsanforderungen angibt;
wobei das Verfahren die folgenden Schritte im Bereich des Zugangsnetzes enthält:

/1/Empfang (21) einer Authentifizierungsanforderung vom mobilen Endgerät;
/2/Inkrementierung (22) des Zählers mit dem Wert 1;
/3/Authentifizierung (24) des mobilen Endgeräts, Vergleich (23) der vom Zähler angegebenen Zahl mit einem Schwellwert, und auf der Basis dieses Vergleichs, Entscheidung der Berechtigung (25) des authentifizierten mobilen Endgeräts, die Aufgabe des Authentifizierungsservers des Zugangsnetzes zu übernehmen, um mindestens eine Authentifizierung eines weiteren mobilen Endgeräts durchzuführen.

2. Authentifizierungsverfahren nach Anspruch 1, bei dem der Schwellwert über einen gegebenen Zeitraum abhängig von einer mittleren Schwellenentfernung zwischen zwei mobilen Endgeräten des Netzes und von einer mittleren Geschwindigkeit der mobilen Endgeräte im Zugangsnetz bestimmt wird.

3. Authentifizierungsverfahren nach Anspruch 2, bei dem der Schwellwert die folgende Gleichung erfüllt:

$$V_{seuil} = \frac{(D \times Vit_{moy})}{Id}$$

wobei D den gegebenen Zeitraum ausdrückt;
wobei $Vit_{moy}$ eine mittlere Geschwindigkeit der mobilen Endgeräte im Netz ausdrückt; und
wobei Id eine mittlere Schwellenentfernung zwischen zwei mobilen Endgeräten des Netzes darstellt.

4. Authentifizierungsverfahren nach Anspruch 2, bei dem die mittlere Geschwindigkeit im Bereich des Zugangsnetzes auf der Basis von Informationen bestimmt wird, die von dem mindestens einen Zugangspunkt (13) empfangen werden.

5. Authentifizierungsverfahren nach Anspruch 4, das die folgenden Schritte im Bereich des Zugangspunkts enthält:

/a/ Empfang eines neuen Pakets von einem mobilen Endgerät;
/b/Inkrementierung eines ersten Zählers mit dem Wert 1, und Inkrementierung eines zweiten Zählers mit dem in dem neuen Paket angegebenen Geschwindigkeitswert;
bei dem die Schritte /a/ und /b/ über einen gegebenen Zeitraum durchgeführt werden, dann die vom ersten Zähler angegebene Anzahl von Paketen und der vom zweiten Zähler angegebene Geschwindigkeitswert an das Zugangsnetz übertragen werden.

6. Authentifizierungsverfahren nach Anspruch 2, bei dem die mittlere Schwellenentfernung zwischen zwei mobilen Endgeräten des Netzes die folgende Gleichung erfüllt:

$$Id_{med} = (Id_{min1} + Id_{min2})/2 \qquad (3)$$

wobei $Id_{min1}$ die folgende Gleichung erfüllt:

$$Id_{min1} = R/(2)^{(2*InterAPDist-10R)/10R} \qquad (1)$$

wobei $Id_{min2}$ die folgende Gleichung erfüllt:

$$Id_{min2} = \tfrac{3}{4}* R \qquad (2)$$

wobei R eine Übertragungsreichweite eines mobilen Endgeräts angibt; und
InterAPDist einer mittleren Entfernung zwischen den verschiedenen Zugangspunkten im Netz entspricht.

**7.** Authentifizierungsverfahren nach Anspruch 1, bei dem ein mobiles Endgerät berechtigt ist, eine Authentifizierung eines anderen mobilen Endgeräts für eine bestimmte Zeitdauer durchzuführen.

**8.** Authentifizierungsverfahren nach Anspruch 5, bei dem ein mobiles Endgerät berechtigt ist, eine Authentifizierung eines anderen mobilen Endgeräts für eine bestimmte Zeitdauer durchzuführen, und bei dem am Ende des gegebenen Zeitraums der erste und der zweite Zähler auf den Wert Null initialisiert werden.

**9.** Authentifizierungsverfahren eines mobilen Endgeräts (14) in einem mobilen Paketübertragungsnetz, das ein Zugangsnetz (11), welches die Aufgabe hat, eine Authentifizierung des mobilen Endgeräts durchzuführen, und mindestens einen Zugangspunkt (13) zum Zugangsnetz (11) enthält;
wobei das Verfahren die folgenden Schritte im Bereich des mobilen Endgeräts enthält:

/1/ Senden einer Authentifizierungsanforderung an das Zugangsnetz;
/2/ Empfang einer Authentifizierungsmitteilung, die Parameter angibt, die es dem mobilen Endgerät ermöglichen, die Aufgabe eines Authentifizierungsservers des Zugangsnetzes zu übernehmen, um eine Authentifizierung eines anderen mobilen Endgeräts durchzuführen.

**10.** Authentifizierungsverfahren nach Anspruch 9, das außerdem die folgenden Schritte im Bereich des mobilen Endgeräts enthält:

/i/ Empfang einer Authentifizierungsanforderung von einem anderen mobilen Endgerät des Netzes;
/ii/ Durchführung der Authentifizierung des anderen mobilen Endgeräts auf der Basis der in der Authentifizierungsmitteilung vom Zugangsnetz empfangenen Parameter.

**11.** Authentifizierungsserver (12) mindestens eines mobilen Endgeräts (14) in einem mobilen Paketübertragungsnetz, wobei der Authentifizierungsserver von mindestens einem Zugangspunkt (13) aus zugänglich ist;
wobei der Authentifizierungsserver enthält:

- einen Zähler (701), der eine Anzahl von empfangenen Authentifizierungsanforderungen angibt;
- eine Empfangseinheit (702), die geeignet ist, um eine Authentifizierungsanforderung vom mobilen Endgerät zu empfangen (21);
- eine Vergleichseinheit (703), die geeignet ist, um die vom Zähler angegebene Zahl mit einem Schwellwert zu vergleichen (23);
- eine Authentifizierungseinheit (704), die geeignet ist, um das mobile Endgerät zu authentifizieren (24), und um auf der Basis der Vergleichseinheit zu entscheiden, das authentifizierte mobile Endgerät zu berechtigen (25), die Aufgabe der Authentifizierungseinheit zu übernehmen, um eine Authentifizierung eines anderen mobilen Endgeräts durchzuführen.

**12.** Authentifizierungsserver (12) nach Anspruch 11, der außerdem eine Bestimmungseinheit (705) enthält, die geeignet ist, um den Schwellwert über einen gegebenen Zeitraum abhängig von einer mittleren Schwellenentfernung zwischen zwei mobilen Endgeräten des Netzes und einer mittleren Geschwindigkeit der mobilen Endgeräte im Netz zu bestimmen.

**13.** Mobiles Endgerät (14), das geeignet ist, um in einem mobilen Paketübertragungsnetz zu kommunizieren, das ein Zugangsnetz (11), welches die Aufgabe hat, eine Authentifizierung des mobilen Endgeräts durchzuführen, und mindestens einen Zugangspunkt (13) zum Zugangsnetz (11) enthält;
wobei das Endgerät enthält:

- eine Sendeeinheit (710), die geeignet ist, um eine Authentifizierungsanforderung an das Zugangsnetz zu senden;
- eine Empfangseinheit (711), die geeignet ist, um eine Authentifizierungsmitteilung zu empfangen, die Parameter angibt, welche es ermöglichen, eine Authentifizierung eines anderen mobilen Endgeräts durchzuführen; und
- eine Authentifizierungseinheit (712), die geeignet ist, um die Aufgabe eines Authentifizierungsservers des Zugangsnetzes zu übernehmen, um ein anderes mobiles Endgerät zu authentifizieren.

**14.** System zur Authentifizierung mindestens eines Endgeräts in einem mobilen Paketübertragungsnetz, das ein Zugangsnetz (11) enthält, welches die Aufgabe hat, eine Authentifizierung des mobilen Endgeräts durchzuführen, wobei das Authentifizierungssystem mindestens einen Authentifizierungsserver (12) nach Anspruch 11 und einen Zugangspunkt (13) zum Zugangsnetz (11) enthält; wobei der Zugangspunkt enthält:

- einen ersten Zähler (720), der eine Anzahl von empfangenen Paketen angibt;
- einen zweiten Zähler (721), der eine Summe der Geschwindigkeiten der mobilen Endgeräte angibt, die in den empfangenen Paketen angegeben werden; und
- eine Sendeeinheit (722), die geeignet ist, um an das Zugangsnetz die im ersten und zweiten Zähler am Ende eines gegebenen Zeitraums angegebenen Werte zu übertragen.

**15.** Computerprogramm, das Anweisungen zur Durchführung des Verfahrens nach Anspruch 1 aufweist, wenn dieses Programm von einem Prozessor ausgeführt wird.

FIG. 1

FIG. 2

31 32 33 34 35 36 37 38 39 301 302

| Version | Flag | Source ID | Destination ID | Source position | Source speed | Destination position or region | Originating time | Lifetime | Transmitter position | Transmitter Certificate |

| EAP packet | Transmitter signature |

304

**FIG. 3**

305

19

IP Layer — IP Layer Protocols — 45

Authentication Layer — Authentication and Credential Delivery (AUCRED) protocol — 44

EAP Layer — Extensible Authentication Procol (EAP) — 43

EAP Geographic and positioning Encapsulation for multi-hop transport (EGEMO) — 42

41

MAC Layer — DSRC — IEEE 802.11 — . . .

**FIG. 4**

cpt = Req Auth — 50

Recept Req Auth — 51

cpt = cpt + 1 — 52

V seuil < cpt — 53

Non — auth — 54

Oui — auth — 54

+ autoriser auth — 55

**FIG. 5**

**FIG. 6**

EP 2 335 431 B1

**FIG. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080083022 A

**Littérature non-brevet citée dans la description**

- **H. MOUSTAFA ; C. BOURDON.** Authentication and Services Access Control in a Cooperative Adhoc Environment. *les actes de la conférence BROADNETS,* 2008

- **C. TCHEPNDA et al.** Performance Analysis of a Layer-2 Multi-Hop Authentication and Credential Delivery Scheme for Vehicular Networks. *les actes de la conférence VTC,* 2008